# EUROPÄISCHE PATENTSCHRIFT

(11) **EP 3 292 931 B1**
(45) Veröffentlichungstag und Bekanntmachung des Hinweises auf die Patenterteilung: **17.11.2021**
(21) Anmeldenummer: 17182281.0
(22) Anmeldetag: 20.07.2017
(51) Int. Cl.: B23B 29/04

(54) **WERKZEUG, INSBESONDERE FÜR DIE SPANABHEBENDE WERKSTÜCKBEARBEITUNG**
TOOL, IN PARTICULAR FOR THE MACHINING OF WORKPIECES
OUTIL, NOTAMMENT POUR L'USINAGE DE PIÈCES À ENLÈVEMENT DE COPEAUX

(30) Priorität: 13.09.2016 DE 202016105061 U
(43) Veröffentlichungstag der Anmeldung: 14.03.2018
(73) Patentinhaber: Baum GmbH Zerspanungstechnik & Werkzeugbau, 33142 Büren-Brenken (DE)
(72) Erfinder: Baum, Norbert, 33142 Büren-Brenken (DE); Baum, Thomas, 33142 Büren-Brenken (DE); Schreckenberg, Andreas, 33142 Büren-Brenken (DE)
(74) Vertreter: Ter Meer Steinmeister & Partner

(56) Entgegenhaltungen:
- WO-A1-2015/110985
- FR-A5- 2 180 255
- JP-A- S57 178 605
- US-A- 3 220 088
- US-A1- 2004 136 793

## Beschreibung

Die vorliegende Erfindung betrifft ein Werkzeug, insbesondere für die spanabhebende Werkstückbearbeitung, gemäß dem Oberbegriff des Anspruchs 1. Ein solches Werkzeug ist beispielsweise bereits aus der US 2004/136793 A1 bekannt.

Derartige Werkzeuge sind schon seit längerer Zeit in verschiedenen Ausführungsformen bekannt. Sie umfassen einen Werkzeughalter (im folgenden kurz als Grundhalter bezeichnet), in dessen Ende ein Wechselkopf aufgenommen und darin verspannt ist. Der Wechselkopf trägt eine Schneide, die drehbar und/oder auswechselbar angebracht ist. Denkbar ist auch, dass die Schneide im Rahmen der vorliegenden Erfindung einteilig mit dem Wechselkopf ausgebildet ist.

Der Wechselkopf ist in seinem Sitz in der Ausnehmung derart eingespannt, dass die Schneide bei der Werkstückbearbeitung sicher in einer definierten Position gehalten wird. Gleichzeitig muss jedoch die Möglichkeit bestehen, den Wechselkopf nach Bedarf problemlos auswechseln zu können. Um einerseits eine präzise und sichere Festlegung des Wechselkopfes und andererseits eine bequeme und schnelle Auswechselbarkeit zu gewährleisten, wurde beispielsweise vorgeschlagen, den Wechselkopf mittels einer seitlich am Grundhalter angebrachten Klemmschraube festzuklemmen. Der Wechselkopf ist in diesem Fall mit einem Zapfen versehen, der in eine entsprechende Ausnehmung am Ende des Grundhalters eingeschoben wird. Um die Lage des Wechselkopfes grob zu definieren, können entsprechende Positionierelemente am Grundhalter angebracht sein, wie etwa Stifte, die formschlüssig in entsprechende Ausnehmungen im Wechselkopf eingreifen, oder zum Beispiel eine Anlagefläche zur Aufnahme des Wechselkopfes. Die Klemmschraube wird zur Befestigung des Grundhalters mit einem vorbestimmten Drehmoment seitlich gegen den Zapfen, also quer zur Einschubrichtung desselben angezogen, so dass eine vorbestimmte Klemmkraft wirkt. Zum Entfernen und Auswechseln des Wechselkopfes wird die Klemmschraube einfach mittels eines entsprechenden Werkzeugs gelöst, und der Zapfen wird aus der Ausnehmung herausgezogen.

In der Praxis hat sich erwiesen, dass diese Art der Befestigung des Wechselkopfs auf Dauer keine ausreichend sichere Festlegung der Wechselkopfposition bietet. Dies liegt vor allem daran, dass eine Klemmschraube im wesentlichen nur eine punktuelle Druckfläche an ihrem vorauslaufenden Ende bietet, die insbesondere die Drehposition des Wechselkopfs bezüglich des Grundhalters nicht zuverlässig festlegt. Unter Umständen kann sich nämlich der Zapfen innerhalb der Ausnehmung im Grundhalter verdrehen. Die Klemmkraft lässt sich auf den Zapfen mittels der Schraube nur mit einem sehr ungünstigen Hebelverhältnis aufbringen. Zudem besteht nach einer längeren Betriebszeit des Werkzeugs die Gefahr, dass sich die Schraube geringfügig löst und die Klemmspannung nachlässt. Durch die entstehende Bewegung entstehen Vibrationen die sich negativ auf die Standzeit des Schneide auswirken. Die bekannten Verbindungen zwischen dem Grundhalter und dem Wechselkopf weisen aufgrund der genannten Merkmale eine verringerte Stabilität gegenüber der gängigen einteiligen Werkzeuge auf.

Die Druckschrift EP 3 031 556 A1 zeigt einen Werkzeughalter, in welchem ein Wechselkopf mittels eines Spannhebels gehalten wird. Beim Spannen des Spannhebels wird ein Stift in eine Ausnehmung im Wechselkopf gedrückt. Tatsächlich löst diese Art der Befestigung die oben genannten Probleme jedoch nicht, und eine dauerhaft stabile Positionierung des Kopfes wird nicht erreicht.

US 3,220,088 A offenbart ein Werkzeug, bei welchem ein Wechselkopf mittels einer Spannpratze in einer Ausnehmung gehalten wird. FR 2 180 255 A5 offenbart einen stabförmigen Halter, an dessen Ende eine Schneide angebracht ist und welcher durch eine Spannpratze seitlich in eine Nut gedrückt wird.

Es ist daher eine Aufgabe der vorliegenden Erfindung, dass vorstehend beschriebene Werkzeug mit einem Grundhalter und einem Wechselkopf derart zu verbessern, dass die oben benannten Nachteile vermieden werden und der Wechselkopf auch während der Werkstückbearbeitung dauerhaft zuverlässig in einer präzise definierten Position gehalten wird.

Diese Aufgabe wird erfindungsgemäß durch ein Werkzeug mit den Merkmalen des Anspruchs 1 gelöst.

Bei dem erfindungsgemäßen Werkzeug umfassen die Mittel zum Einspannen des Zapfens in der Ausnehmung einer Spannpratze, die seitlich am Grundhalter angebracht ist. Diese Spannpratze lässt sich gegen den Zapfen spannen. Hierzu dient eine Schraube, die in den Grundhalter einschraubbar ist. Der Zapfen weist mindestens eine seitliche Auflagefläche auf, die zur Aufnahme einer entsprechend ausgebildeten Andruckfläche oder Andruckkante an der Spannpratze vorgesehen ist. Beim Anspannen der Spannpratze gegen den Zapfen kann sich eine entsprechend ausgebildete Andruckfläche flach auf die Auflagefläche des Zapfens legen, so dass der Anpressdruck flächig von der Spannpratze auf den Zapfen übertragen wird. Gegebenenfalls reicht bereits eine Linienauflage einer Andruckkante der Spannpratze auf der Andruckfläche aus, um die verbesserte Druckübertragung zu gewährleisten.

Diese flächige Anlage oder Linienanlage der Andruckfläche oder Andruckkante an der Auflagefläche des Zapfens verhindert ein Verdrehen des Zapfens in seiner Ausnehmung und bietet eine wesentlich bessere Übertragung des Anpressdrucks als die Punktanlage einer Klemmschraube. Gemäß dem Funktionsprinzip einer Spannpratze wird zudem die beim Festziehen der Schraube ausgeübte Spannung mit einem günstigen Hebel auf den Zapfen übertragen, dessen Auflagefläche von der Schraubenachse radial entfernt liegt. Dieser Hebel hält während der Werkstückbearbeitung eine gewisse elastische Spannung aufrecht, die auch bei auftretenden Vibrationen den Wechselkopf zuverlässig in seiner Position hält.

Es hat sich erwiesen, dass dieses Prinzip der Festlegung des Wechselkopfs im Grundhalter auch im längeren Betrieb des Werkzeugs die am Wechselkopf angebrachte Schneide zuverlässig positioniert. Ein Auswechseln des Wechselkopfs bleibt dennoch auf einfache Weise möglich, nämlich durch Lösen der Schraube und Lockern der Spannpratze, so dass der Zapfen des Wechselkopfs einfach aus der Ausnehmung herausziehbar ist.

Erfindungsgemäß verläuft die Auflagefläche im wesentlichen quer zur Einschubrichtung des Zapfens und ist gegenüber dieser geneigt. Hierdurch kann erreicht werden, dass beim Anziehen der Spannpratze die eingeleitete Druckkraft in eine Zugkraft zum Einziehen des Zapfens in seiner Einschubrichtung umgelenkt wird. Mit anderen Worten, der Zapfen wird beim Anziehen der Spannpratze selbsttätig in die Ausnehmung gezogen. Neigung und Verlauf der Auflagefläche sind hierzu zweckmäßig zu wählen.

Gemäß einer bevorzugten Ausführungsform der vorliegenden Erfindung begrenzt die Auflagefläche des Zapfens eine in der Oberfläche des Zapfens vorgesehene Nut, die quer zur Einschubrichtung des Zapfens verläuft. Hierbei kann es sich beispielsweise um eine Einkerbung handeln, die zumindest eine Auflagefläche aufweist, auf welcher die Andruckfläche oder Andruckkante der Spannpratze anliegen kann.

Vorzugsweise begrenzt die Auflagefläche die Nut auf der zur Einschubrichtung des Zapfens weisenden Seite.

Weiter vorzugsweise weist die Nut einen keilförmigen Querschnitt auf.

Weiter vorzugsweise trägt die Spannpratze einen zum Zapfen weisenden Vorsprung, auf welchem die Andruckfläche oder Andruckkante vorgesehen ist.

Weiter vorzugsweise weist der Grundhalter eine seitliche Ausnehmung zur Aufnahme der Spannpratze auf. Im angespannten Zustand kann die Spannpratze dann im Grundhalter versenkt sein.

Gemäß einer weiteren bevorzugten Ausführungsform weist die Spannpratze an dem Ende, an welchem der Vorsprung angebracht ist, eine Stirnfläche oder Stirnkante auf, die an einer die Ausnehmung begrenzenden Stirnwand anliegt.

Ist an der Spannpratze eine Andruckfläche zur Auflage an der Auflagefläche vorgesehen, laufen vorzugsweise die Stirnfläche oder Stimkante und diese Andruckfläche keilförmig aufeinander zu. Die Stirnfläche bzw. Stirnkante und die Andruckfläche bilden zusammen einen Klemmkeil, der sich an einer der Schraube zugewandten Keilflanke in der Nut des Zapfens und an der gegenüber liegenden Keilfläche an der Stirnwand der Ausnehmung abstützt. Durch diesen Klemmkeil lässt sich auch mit einem geringen Anzugsmoment der Schraube eine große Klemmkraft ausüben.

Weiter vorzugsweise ist der Zapfen zylindrisch ausgebildet.

Gemäß einer weiteren bevorzugten Ausführungsform der vorliegenden Erfindung weist der Grundhalter eine weitere Auflagefläche zur Aufnahme einer an der Spannpratze vorgesehenen Gegendruckfläche auf, die der Andruckfläche bezüglich der Schraubenachse gegenüber liegt. Beim Anziehen der Schraube wird die Spannpratze dann in diesem Fall mit ihrer Andruckfläche gegen die Auflagefläche des Zapfens gedrückt, wie bereits oben beschrieben, während die gegenüber der Schraube angeordnete Gegendruckfläche ein Widerlager bildet, über welches sich die Spannpratze am Korpus des Grundhalters abstützt. Hierdurch kann die Hebelwirkung nochmals verbessert werden.

Vorzugsweise sind die Andruckfläche und die Gegendruckfläche der Spannpratze in diesem Fall an ersten und zweiten Endabschnitten der Spannpratze angebracht, die sich von der Schraubenachse aus in entgegengesetzten Richtungen erstrecken.

Weitere Merkmale und Vorteile der vorliegenden Erfindung ergeben sich aus der nachfolgenden Beschreibung einer bevorzugten Ausführungsform, die anhand der folgenden Zeichnungen näher erläutert werden soll.
- Fig. 1 und 2: zeigen eine bevorzugte Ausführungsform eines erfindungsgemäßen Werkzeugs in verschiedenen Ansichten;
- Fig. 3: ist ein Schnitt durch das Werkzeug aus Fig. 2 entlang der Ebene A-A; und
- Fig. 4: ist eine Detailansicht des Ausschnitts B in Fig. 3.

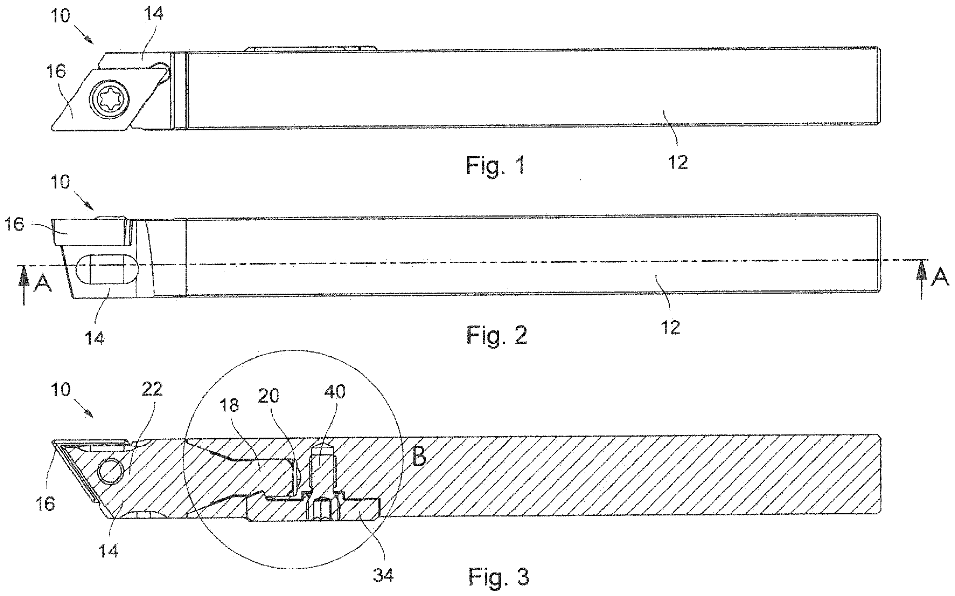

Fig. 1 zeigt ein Werkzeug 10 für die spanabhebende Werkstückbearbeitung. Das Werkzeug umfasst einen Grundhalter 12 und einen Wechselkopf 14, der an einem Ende des Grundhalters 12 auswechselbar angebracht ist (in Fig. 1 am linken Ende). Der Wechselkopf 14 trägt eine Schneide 16, die im eigentlichen Sinne zur spanabhebenden Werkstückbearbeitung dient.

Das Werkzeug 10 ist dazu vorgesehen, fest in eine dazu vorgesehene Vorrichtung einer Werkzeugmaschine eingespannt zu werden, derart, dass eine vorgegebene genaue Positionierung der Schneide 16 definiert ist. Im laufenden Betrieb der Werkzeugmaschine ist es erforderlich, die Schneide 16 gelegentlich zu wechseln, entweder aufgrund der Abnutzung der Schneide 16 oder zur Verwendung einer anders ausgebildeten Schneide 16. Hierzu kann der Wechselkopf 14 zusammen mit der Schneide 16 ausgetauscht werden, während der Grundhalter 12 selbst eingespannt bleibt. Dies erleichtert den Auswechselvorgang und verkürzt die Rüstzeiten der Werkzeugmaschine.

Das Werkzeug 10 aus Fig. 1 ist in Fig. 2 in einer Position dargestellt, in der es um 90° um die Hauptachse des Grundhalters 12 gedreht ist.

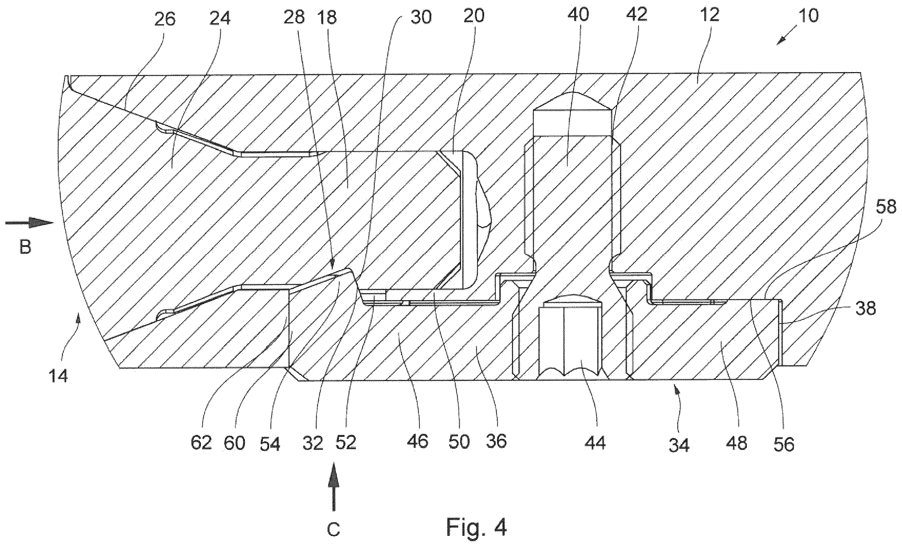

Fig. 3 zeigt einen Längsschnitt entlang der Ebene A-A in Fig. 2 und demonstriert somit den inneren Aufbau des Werkzeugs 10, insbesondere die Konstruktion der Aufnahme des Wechselkopfs 14 im Grundhalter 12 und die Mittel zum Einspannen des Wechselkopfs 14 in der eingesetzten Position. Fig. 4 zeigt Einzelheiten aus Fig. 3 in einer vergrößerten Ansicht.

Der Wechselkopf 14 weist an seinem zum Grundhalter 12 weisenden Ende einen Zapfen 18 auf, der in eine entsprechend ausgeformte Ausnehmung 20 am entsprechenden Ende des Grundhalters 12 einschiebbar ist. Bei der vorliegenden Ausführungsform ist der Zapfen 18 im Wesentlichen zylindrisch ausgebildet und ist mit dem freien Ende 22 des Wechselkopfs 14, das die Schneide 16 trägt, durch einen kegelstumpfförmigen Ansatz 24 verbunden. Über diesen Ansatz 24 verjüngt sich somit der Durchmesser des Wechselkopfs 14 zum Zapfen 18 hin.

Die Ausnehmung 20 zur Aufnahme des Zapfens 18 ist als Sackbohrung ausgebildet. Der Zapfen lässt sich somit in einfacher Weise in die Ausnehmung 20 einschieben, bis die Außenfläche des kegelstumpfförmigen Ansatzes 24 an eine entsprechend ausgebildete trichterförmige Innenfläche 26 des Grundhalters 12 anschlägt, die sich an die Ausnehmung 20 anschließt. In den Figuren ist jeweils die vollständig eingeschobene Position des Zapfens 18 in der Ausnehmung 20 dargestellt.

Der Zapfen 18 weist eine seitlich angeordnete Nut 28 auf, die quer zur Einschubrichtung B des Zapfens verläuft. Diese Einschubrichtung B entspricht in der Darstellung der Fig. 3 und 4 der Richtung nach rechts, während die Nut 28 an der unteren Seite des Zapfens 18 liegt. Bei der Nut 28 handelt es sich um eine keilförmige Einkerbung. Eine der Keilflächen, nämlich diejenige, die zum Einschubende des Zapfens 18 weist, bildet eine Auflagefläche 30 zur Aufnahme einer entsprechend ausgebildeten Andruckfläche 32 einer Spannpratze 34, die seitlich in den Grundhalter 12 eingesetzt ist. Diese Einsetzrichtung C ist in Fig. 4 durch einen Pfeil gekennzeichnet. Die Auflagefläche 30 liegt in einer Ebene, die sich im Wesentlichen quer zur Einschubrichtung B des Zapfens 18 erstreckt und gegenüber dieser und der Einsetzrichtung C der Spannpratze 34 etwas geneigt ist.

Die Spannpratze 34 umfasst einen länglichen Körper 36, der in einer seitlichen Ausnehmung 38 zur Aufnahme der Spannpratze 34 einliegt. Im eingespannten Zustand ist die Spannpratze 34 nahezu vollständig in den Grundhalter 12 versenkt. Durch die Spannpratze 34 hindurch erstreckt sich eine Schraube 40, die in ein Innengewinde 42 im Grundhalter 12 eingeschraubt ist. Die Schraubenachse der Schraube 40 erstreckt sich quer zur Hauptachse des Grundhalters 12 und quer zur Einschubrichtung B des Zapfens 18 und zu dessen Hauptachse. Sie ist in einer gedachten Verlängerung der Ausnehmung 20 angeordnet, also bezüglich der Einschubrichtung B des Zapfens 18 hinter dem Ende der entsprechenden Sackbohrung. Innerhalb des Körpers 36 der Spannpratze 34 ist der Kopf 44 der Schraube 40 frei drehbar gehalten. Liegt die Spannpratze 34 in der Ausnehmung 38 ein, kann die Schraube 40 in das Innengewinde 42 eingedreht werden, während ihr Kopf 44 frei im Körper 36 rotiert. Die Spannpratze 34 wird auf diese Weise in ihrer Einsetzrichtung C in die Ausnehmung 38 hinein gezogen.

Gemäß einer hier nicht dargestellten Ausführungsform ist der Kopf 44 der Schraube 40 ebenfalls mit einem Außengewinde versehen, das in ein entsprechendes Innengewinde in der Spannpratze 34 eingesetzt ist und eine entgegengesetzte Drehrichtung aufweist. Dies bewirkt beim Hineindrehen der Schraube 40 in das Innengewinde 42 des Grundhalters 12 eine zusätzliche Bewegung der Spannpratze 34 bezüglich der Schraube 40 in die Ausnehmung 38 hinein.

Der Körper 36 der Spannpratze 34 umfasst zwei Endabschnitte, nämlich einen ersten längeren Endabschnitt 46 und einen zweiten kürzeren Endabschnitt 48, die sich von der Schraubenachse aus in entgegengesetzten Richtungen erstrecken. Der erste Endabschnitt 46 erstreckt sich von der Schraubenachse aus parallel zum Zapfen 18, während der zweite Endabschnitt 36 von dem Zapfen 18 weg weist. Der erste Endabschnitt 46 liegt in einem Teil der Ausnehmung 38 ein, der von der Ausnehmung 20 zur Aufnahme des Zapfens 18 durch eine Wand 50 getrennt ist. An dem zum Wechselkopf 14 weisenden Ende der Ausnehmung 38 weist die Wand 50 einen Durchbruch 52 auf, durch welchen die Ausnehmung 38, in welcher die Spannpratze 34 einliegt, und die Ausnehmung 20 zur Aufnahme des Zapfens 18 verbunden sind.

Durch den Durchbruch 52 hindurch erstreckt sich ein Vorsprung 54, der am Ende des ersten Endabschnitts 46 angebracht ist und zum Zapfen 18 weist. Der Vorsprung 54 weist einen keilförmigen Querschnitt auf, entsprechend der Keilform der Nut 28, und erstreckt sich in die Nut 28 hinein. Der Vorsprung 54 trägt an der zur Schraube 40 weisenden Keilflanke die bereits erwähnte Andruckfläche 32 der Spannpratze 34. Diese Andruckfläche 32 ist, ebenso wie die Auflagefläche 30 in der Nut 28, flach und eben ausgebildet.

Beim Anspannen der Spannpratze 34 wird die Andruckfläche 32 am Vorsprung 54 gegen die Auflagefläche 30 in der Nut 28 gedrückt, so dass der über die Schraube 40 in die Spannpratze 34 eingeleitete Druck flächig in den Zapfen 18 eingeleitet wird. Hierdurch ergibt sich eine sichere formschlüssige Verbindung. Mit zunehmendem Druck wird aufgrund der Neigung der Auflagefläche 30 und der Andruckfläche 32 gegenüber der Wirkungslinie der Druckkraft (in Fig. 4 senkrecht) eine Kraft zum Einzug des Zapfens 18 in seine Ausnehmung 20 erhöht, wodurch der Sitz des kegelstumpfförmigen Ansatzes 24 in der entsprechenden Aufnahmefläche 26 des Grundhalters 12 durch eine Flächenpressung verbessert wird.

Eine vergleichbare Wirkung kann durch eine Andruckkante erreicht werden, die anstelle der Andruckfläche 32 an der zur zur Schraube 40 weisenden Innenseite des Vorsprungs 54 angebracht ist und sich quer zur Einschubrichtung B des Zapfens 18 und quer zur Einsetzrichtung C der Spannpratze 38 erstreckt, also in der Darstellung in Fig. 4 senkrecht zur Zeichnungsebene. Der Vorsprung 54 liegt dann entlang dieser Andruckkante auf der Auflagefläche 30 auf, so dass eine Linienauflage erreicht wird. Mit zunehmendem Druck der Spannpratze 34 gleitet die Andruckkante auf der geneigten Auflagefläche 30 tiefer in die Nut 28, und die Druckkraft wird in eine Zugkraft zum Hineinziehen des Zapfens 18 in die Ausnehmung 20 umgeleitet, wie oben beschrieben. Diese Ausführungsform, in welcher der Druck entlang einer Auflagelinie einer Andruckkante anstelle einer Flächenpressung übertragen wird, ist in den Figuren nicht dargestellt.

An dem ersten Endabschnitt 46, an welchem der Vorsprung 54 angebracht ist, weist die Spannpratze 34 eine Stirnfläche 60 auf, die an einer die Ausnehmung 38 begrenzenden Stirnwand 62 anliegt. In dem Querschnitt in Fig. 4 erstreckt sich die Stirnfläche 60 senkrecht zur Einschubrichtung B des Zapfens 18 entlang der Einsetzrichtung C der Spannpratze 38. Die Andruckfläche 32 ist somit gegenüber der Stirnfläche 60 geneigt, derart, dass die Andruckfläche 32 und die Stirnfläche 60 auf den beiden gegenüber liegenden Seiten des Vorsprungs 54 keilförmig in Richtung des Zapfens 18, also in einer Einsetzrichtung C der Spannpratze 38 aufeinander zulaufen und einen Klemmkeil am entsprechenden Ende der Spannpratze 38 bilden. Beim Anziehen der Spannpratze 38 wird dieser Klemmkeil zwischen die Aufnahmefläche 30 und die Stirnwand 62 der Ausnehmung 38 gepresst, so dass eine hohe Klemmkraft erreicht wird.

Die Stirnfläche 60 am ersten Endabschnitt 46 der Spannpratze 34 kann bei einer nicht dargestellten Ausführungsform auch durch eine Stirnkante ersetzt werden, die an der Stirnwand 62 anliegt und senkrecht zur Einschubrichtung B des Zapfens 18 entlang der Einsetzrichtung C der Spannpratze 38 verläuft, also entsprechend der Darstellung des Querschnitts der Stirnfläche 60 in Fig. 4. In diesem Fall wird auch am ersten Endabschnitt 46 der Spannpratze 34 eine Linienpressung zwischen der Stirnkante und der Stirnwand 62 erreicht. Ferner ist eine Ausführungsform denkbar, bei welcher am ersten Endabschnitt 46 der Spannpratze 34 eine solche Stirnkante zur Auflage an der Stirnwand 62 vorgesehen ist und auf der gegenüber liegenden Seite des Vorsprungs 54 eine Andruckkante anstelle der Andruckfläche 32 zur Auflage auf der Auflagefläche 30 des Zapfens 18, d.h., auf beiden Seiten des Vorsprungs wird eine Linienpressung erreicht. Bevorzugt erstrecken die Andruckkante und die Stirnkante sich in diesem Fall senkrecht zueinander.

Der gegenüberliegende zweite Endabschnitt 48 der Spannpratze 34 trägt auf der dem Grundhalter 12 zugewandten Seite eine Gegendruckfläche 56 zur Auflage auf einer weiteren Auflagefläche 58 am Grundhalter 12, nämlich auf dem Grund der Ausnehmung 38, dem Durchbruch 52 gegenüber liegend. Diese zusätzliche Auflagefläche 58 am Grundhalter 12 dient als Gegenlager beim Verspannen der Spannpratze 34 gegen den Zapfen 18, wie zuvor beschrieben. Beim Einspannen der Spannpratze 34 bildet der Körper 36 nämlich einen Hebel, der sich zwischen den entgegengesetzten Enden der Endabschnitte 46, 48 erstreckt. Hierdurch wird eine gute Einleitung der Keilspannung auf die Auflagefläche 30 am Zapfen 18 gewährleistet.

Gegenüber der dargestellten Ausführungsform sind Abweichungen möglich. So können beispielsweise beide Keilflächen des Vorsprungs 54 als Andruckflächen zur Auflage an entsprechenden Auflageflächen in der Nut des Zapfens dienen. Ferner können beispielsweise auch Querschnitte der Nut und des Vorsprungs verwendet werden, die von einer Keilform abweichen. Ferner muss die Schneide 16 nicht drehbar oder auswechselbar am Wechselkopf 14 angeordnet sein, sondern der Wechselkopf 14 kann einteilig mit einer Schneide verbunden sein, bzw. ein freies Ende des Wechselkopfs 14 selbst kann die Schneide bilden.

Es ist ferner möglich, zwei am Umfang des Zapfens 18 spiegelbildlich gegenüber liegende Auflageflächen zur Aufnahme der Spannpratze 34 vorgesehenen Andruckfläche oder Andruckkante vorzusehen. Der Zapfen 18 lässt sich dann in zwei zueinander um 180° um seine Zapfenachse gedrehten Positionen festlegen. Der Wechselkopf 14 ist dann in zwei zueinander gedrehten Positionen einsetzbar.

## Patentansprüche

1. Werkzeug (10), insbesondere für die spanabhebende Werkstückbearbeitung, mit einem Grundhalter (12) und einem Wechselkopf (14), der eine Schneide (16) trägt und einen Zapfen (18) aufweist, der in einer Einschubrichtung B in eine entsprechende Ausnehmung (20) an einem Ende des Grundhalters (12) einschiebbar ist, sowie Mitteln zum Einspannen des Zapfens (18) in der Ausnehmung (20), wobei die Mittel eine seitlich am Grundhalter (12) angebrachte Spannpratze (34) umfassen, sowie eine in den Grundhalter (12) einschraubbare Schraube (40) zum Spannen der Spannpratze (34) gegen den Zapfen (18), wobei der Zapfen (18) an seiner Seite mindestens eine Auflagefläche (30) zur Aufnahme einer an der Spannpratze (34) vorgesehenen Andruckfläche (32) oder Andruckkante aufweist, wobei die Auflagefläche (30) im Wesentlichen quer zur Einschubrichtung (B) des Zapfens (18) verläuft und gegenüber dieser geneigt ist und wobei die Schraubenachse der Schraube (40) sich quer zur Hauptachse des Grundhalters (12), quer zur Einschubrichtung B des Zapfens (18) und quer zur Hauptachse des Zapfens (18) erstreckt,
**dadurch gekennzeichnet, dass** die Schraubenachse der Schraube (40) in einer gedachten Verlängerung der Ausnehmung (20) bezüglich der Einschubrichtung B angeordnet ist.

2. Werkzeug gemäß Anspruch 1, **dadurch gekennzeichnet, dass** die Auflagefläche (30) eine in der Oberfläche des Zapfens (18) vorgesehene Nut (28) begrenzt, die quer zur Einschubrichtung (B) des Zapfens (18) verläuft.

3. Werkzeug gemäß Anspruch 2, **dadurch gekennzeichnet, dass** die Auflagefläche (30) die Nut (28) auf der zur Einschubrichtung (B) des Zapfens (18) weisenden Seite begrenzt.

4. Werkzeug gemäß Anspruch 2 oder 3, **dadurch gekennzeichnet, dass** die Nut (28) einen keilförmigen Querschnitt aufweist.

5. Werkzeug gemäß einem der vorhergehenden Ansprüche, **dadurch gekennzeichnet, dass** die Spannpratze (34) einen zum Zapfen (18) weisenden Vorsprung trägt, auf welchem die Andruckfläche (32) oder Andruckkante vorgesehen ist.

6. Werkzeug gemäß einem der vorhergehenden Ansprüche, **dadurch gekennzeichnet, dass** der Grundhalter (12) eine seitliche Ausnehmung (38) zur Aufnahme der Spannpratze (34) aufweist.

7. Werkzeug gemäß Anspruch 6, **dadurch gekennzeichnet, dass** die Spannpratze (34) an dem Ende, an welchem der Vorsprung angebracht ist, eine Stirnfläche (60) oder Stirnkante aufweist, die an einer die Ausnehmung (38) begrenzenden Stirnwand (62) anliegt.

8. Werkzeug gemäß Anspruch 7, **dadurch gekennzeichnet, dass** die Stirnfläche (60) oder Stirnkante und eine an der Spannpratze (34) vorgesehene Andruckfläche (32) zur Auflage an der Auflagefläche (30) in Richtung des Zapfens (18) keilförmig aufeinander zulaufen.

9. Werkzeug gemäß einem der vorhergehenden Ansprüche, **dadurch gekennzeichnet, dass** der Zapfen (18) zylindrisch ausgebildet ist.

10. Werkzeug gemäß einem der vorhergehenden Ansprüche, **dadurch gekennzeichnet, dass** der Grundhalter (12) eine weitere Auflagefläche (58) zur Aufnahme einer an der Spannpratze (34) vorgesehenen Gegendruckfläche (56) aufweist, die der Andruckfläche (32) bezüglich der Schraubenachse gegenüber liegt.

11. Werkzeug gemäß Anspruch 10, **dadurch gekennzeichnet, dass** die Andruckfläche (32) und die Gegendruckfläche (56) an ersten und zweiten Endabschnitten (46, 48) der Spannpratze (34) angebracht sind, die sich von der Schraubenachse aus in entgegengesetzten Richtungen erstrecken.

## Claims

1. Tool (10), in particular for the chip-removing machining of workpieces, with a basic holder (12) and an interchangeable head (14) which carries a cutting edge (16) and a peg (18), which can be inserted in an insertion direction B into a corresponding recess (20) on one end of the basic holder (12) and means for clamping the peg (18) in the recess (20) with the means comprising a clamping claw (34) mounted laterally on the basic holder (12) and a screw (40) which can be screwed into basic holder (12) for tensioning clamping claw (34) against peg (18), with peg (18) having at least one receiving surface (30) on its side for receiving a pressure surface (32) or pressure edge provided on clamping claw (34), with receiving surface (30) running essentially crosswise to the insertion direction (B) of peg (18) and being inclined relative to the latter, and with the screw axis of screw (40) extending crosswise to the main axis of basic holder (12), crosswise to insertion direction B of peg (18) and crosswise to the main axis of peg (18), **characterised in that** the screw axis of screw (40) is disposed in an imaginary extension of recess (20) relative to insertion direction B.

2. Tool according to claim 1, **characterised in that** receiving surface (30) delimits a groove (28) provided in the surface of peg (18), which runs crosswise to insertion direction (B) of peg (18).

3. Tool according to claim 2, **characterised in that** receiving surface (30) delimits groove (28) on the side facing insertion direction (B) of peg (18).

4. Tool according to claim 2 or 3, **characterised in that** groove (28) has a wedge-shaped cross-section.

5. Tool according to one of the previous claims, **characterised in that** clamping claw (34) carries a projection facing peg (18) on which the pressure surface (32) or pressure edge is provided.

6. Tool according to one of the previous claims, **characterised in that** the basic holder (12) has a lateral recess (38) for receiving the clamping claw (34).

7. Tool according to claim 6, **characterised in that** the clamping claw (34) has, at the end on which the projection is mounted, has an end surface (60) or end edge which abuts against an end wall (62) bordering on recess (38).

8. Tool according to claim 7, **characterised in that** the end surface (60) or end edge and a pressure surface (32) provided on clamping claw (34) for bearing on receiving surface (30) converge in a wedge shape in the direction of peg (18) .

9. Tool according to one of the previous claims, **characterised in that** the peg (18) is cylindrical.

10. Tool according to one of the previous claims, **characterised in that** the basic holder (12) has an additional receiving surface (58) for receiving a counter-pressure surface (56) provided on clamping claw (34), said counter-pressure surfacing lying opposite the pressure surface (32) relative to the screw axis.

11. Tool according to claim 10, **characterised in that** the pressure surface (32) and the counter-pressure surface (56) are mounted on first and second end sections (46, 48) of clamping claw (34) which extend outward from the screw axis in opposite directions.

## Revendications

1. Outil (10), en particulier pour l'usinage de pièces par enlèvement de copeaux, comportant un porte-outil principal (12) et une tête interchangeable (14) portant un tranchant (16) et comportant un tenon (18) qui peut être inséré dans une direction d'insertion (B) dans un évidement (20) correspondant sur une extrémité du porte-outil principal (12), ainsi que des moyens pour serrer le tenon (18) dans l'évidement (20), dans lequel les moyens comprennent une griffe de serrage (34) fixée latéralement sur le porte-outil principal (12), ainsi qu'une vis (40) vissable dans le porte-outil principal (12) pour serrer la griffe de serrage (34) contre le tenon (18), dans lequel le tenon (18) comporte sur son côté au moins une face d'appui (30) pour recevoir une face de pression (32) ou une arête de pression prévue sur la griffe de serrage (34), dans lequel la face d'appui (30) s'étend de manière sensiblement transversale à la direction d'insertion (B) du tenon (18) et est inclinée par rapport à celui-ci, et dans lequel l'axe de vis de la vis (40) s'étend transversalement à l'axe principal du porte-outil principal (12), transversalement à la direction d'insertion (B) du tenon (18) et transversalement à l'axe principal du tenon (18),
**caractérisé en ce que** l'axe de vis de la vis (40) est agencé dans une extension fictive de l'évidement (20) par rapport à la direction d'insertion (B).

2. Outil selon la revendication 1, **caractérisé en ce que** la face d'appui (30) délimite une rainure (28) prévue dans la surface du tenon (18), laquelle rainure s'étend transversalement à la direction d'insertion (B) du tenon (18).

3. Outil selon la revendication 2, **caractérisé en ce que** la face d'appui (30) délimite la rainure (28) du côté dirigé vers la direction d'insertion (B) du tenon (18) .

4. Outil selon la revendication 2 ou 3, **caractérisé en ce que** la rainure (28) a une section transversale en forme de coin.

5. Outil selon l'une des revendications précédentes, **caractérisé en ce que** la griffe de serrage (34) supporte une partie en saillie dirigée vers le tenon (18), sur laquelle la face de pression (32) ou l'arête de pression est prévue.

6. Outil selon l'une des revendications précédentes, **caractérisé en ce que** le porte-outil principal (12) comporte un évidement latéral (38) pour recevoir la griffe de serrage (34).

7. Outil selon la revendication 6, **caractérisé en ce que** la griffe de serrage (34) comporte, au niveau de l'extrémité sur laquelle la partie en saillie est fixée, une face frontale (60) ou une arête frontale qui vient en butée contre une paroi frontale (62) délimitant l'évidement (38).

8. Outil selon la revendication 7, **caractérisé en ce que** la face frontale (60) ou l'arête frontale et une face de pression (32) prévue sur la griffe de serrage (34) convergent en forme de coin en direction du tenon (18) pour s'appliquer sur la face d'appui (30).

9. Outil selon l'une des revendications précédentes, **caractérisé en ce que** le tenon (18) est formé de manière cylindrique.

10. Outil selon l'une des revendications précédentes, **caractérisé en ce que** le porte-outil principal (12) comporte une face d'appui supplémentaire (58) pour recevoir une face de contre-pression (56) prévue sur la griffe de serrage (34), laquelle face de contre-pression est à l'opposé de la face de pression (32) par rapport à l'axe de vis.

11. Outil selon la revendication 10, **caractérisé en ce que** la face de pression (32) et la face de contre-pression (56) sont montées sur des première et seconde parties d'extrémité (46, 48) de la griffe de serrage (34) qui s'étendent dans des directions opposées à partir de l'axe de vis.
